# EUROPEAN PATENT SPECIFICATION

(11) **EP 2 902 094 B1**
(45) Date of publication and mention of the grant of the patent: **26.06.2024**
(21) Application number: 14153348.9
(22) Date of filing: 30.01.2014
(51) Int. Cl.: B01D 69/06, B01D 69/14, B01D 71/26, B01D 71/30

(54) **Filtration membrane**
Filtrationsmembran
Membrane de filtration

(43) Date of publication of application: 05.08.2015
(73) Proprietor: HurraH S.à r.l., 8281 Kehlen (LU)
(72) Inventor: LAINE, CAROLE, 6717 ATTERT (BE); KHALOUCHE, Cana, 57440 ALGRANGE (FR); VANKELECOM, Ivo, 3050 OUD-HEVERLEE (BE); ROIL BILAD, Muhammad, 83511 NUSA TENGGARA BARAT (ID)
(74) Representative: Brants, Johan P.E.

(56) References cited:
- EP-A2- 0 081 182
- EP-A2- 2 366 449
- WO-A1-2013/066487
- DE-A1-102012 001 544
- LIU BAICANG ET AL: "Low-cost antifouling PVC ultrafiltration membrane fabrication with Pluronic F 127: Effect of additives on properties and performance", DESALINATION, vol. 307, 25 September 2012 (2012-09-25), pages 26-33, XP028944057, ISSN: 0011-9164, DOI: 10.1016/J.DESAL.2012.07.036

## Description

### Field of the invention

The present invention is related to the field of fluid filtration with an organic novel self-supporting membrane, particularly useful for membrane technology e.g. in water filtration and wastewater purification.

### Background of the invention

Organic filtration membranes are mostly prepared from polymeric materials forming flexible matrix requiring a support for their use in filtration. This sort of matrix is generally prepared through the phase inversion method, for example. The membranes are used for a variety of applications depending on their properties such as material, morphology, pore size, etc. In general, the filtrations are operated in two ways, cross flow when the permeate flow direction is perpendicular to feed flow direction and dead-end filtration when the retentate stream does not exist. In a membrane filtration process, the permeate passes through the membrane, and the solutes are retained and accumulate on the membrane surface to often foul the membrane. As the amount of the foulant increases, the filtration efficiency decreases, which is represented by the increase of the transmembrane pressure (TMP) (under a fixed flux operation) or the decrease of flux (under a constant TMP operation). As pressure increases, membrane rupture may occur. Due to this fouling problem, application of membrane technology is strongly limited, especially for filtration of feeds with high solid or colloid concentration and in the presence of living micro-organisms, such as in membrane bioreactor (MBR) and membrane photobioreactor (MPBR).

To remedy the fouling, it may be desirable to introduce a flocculating agent, perform relaxation and/or back washing, add antifouling particles and/or fouling inhibition agent, use self-cleaning membranes, apply a shear enhancement process and/or perform maintenance and intensive cleaning cycles.

The relaxation and backwashing are performed by respectively intermittently stopping the filtration process or pumping the permeate in opposite direction to the feed side. Chemical or biochemical cleaning of membranes is costly, not environmentally friendly and can seriously decrease the membrane lifetime. The application of these techniques generally decreases the membrane throughput and increases the down time. They thus increase costs (labor, chemicals, increased required membrane area, increased downtime, etc) and energy consumption. Those aforementioned remediation actions are generally still inefficient.

The shear-rate can be induced by gas-bubbles. The bubbles are generated from a pressurized blower and distributed by an air diffuser underneath the membrane module. But, relatively weak shear forces are experienced and it is difficult to achieve an effective bubble distribution.

Antifouling particles can also be added to the air bubble scouring. This technique needs a homogeneous shear over the full membrane surface that is difficult to achieve. Moreover, it is limited to drag force provided by the movement of air bubbles and the particles need to move under a certain limit to prevent scratching of the membrane surface.

Enhancement of the shear-rate at the feed side is performed in a unique set-up such as rotating cylindrical membranes, rotating disk systems and vibrating systems. However, this results in relatively high construction costs, high energy consumptions, as well as a high complexity and required safety level to operate those techniques.

In general, the membranes are formed by a resin or polymer matrix on the top of a supporting organic base resin or non-woven material. In some cases, the supporting base can be more expensive than the matrix itself. Moreover, a low attachment of the membranes between the matrix and the supporting base leads to the detachment, the delamination and/or the stripping of the membranes.

On the top of that to be applicable for filtration process, the membranes are usually processed to form a membrane module (sometime called cartridge). Several components are required because of the flexibility of the membranes. More precisely, the module consists of two membranes, a spacer and a frame. The two membranes are placed with their supports directed to each other, and a spacer is placed between them to create a gap. The spacer prevents, among other things, that the membranes stick to each other with the pressure filtration. The intensive fabrication is limited because of the assembling of many components and the number of steps thus compromising risks of fabrication failure and costs (materials and fabrication). Moreover the weak adhesion of the membranes to their support limits the efficiency of the measures taken to limit fouling.

Liu Baicang et al. ("Low-cost antifouling PVC ultrafiltration membrane fabrication with Pluronic F 127: Effect of additives on properties and performance", Desalination, vol. 307 , pages 26-33) discloses antifouling PVC ultrafiltration membrane fabrication with pluronic F127.

EP 2 366 449 discloses a membrane in which the surface in contact with a fluid to be treated has repetitive convex-concave patterns. Also provided is a method for manufacturing a membrane, compring: (i) casting a mold, one surface of which having repetitive convex-concave patterns, with a polymer solution to form a mold-polymer layer laminate in which a polymer layer having a surface with replica patterns inverse to the patterns of the mold is formed on the patterns of the mold; and (ii) removing the mold from the mold-polymer layer laminate.

### General descriptions of the invention

In order to reach the above-mentioned attempt, the present invention concerns an organic filtration membrane according to claim 1, especially for use in pressure driven liquid filtrations, said membrane comprising a self-supporting matrix having pores.

By "organic", we mean essentially based of organic material, especially polymeric material.

By "self-supporting matrix", we mean especially that the matrix supports its own weight, it is able to hold firm without support and does not collapse on itself. It means for instance a matrix which can be bent but not folded unlike a paper sheet like matrix. This term does hence not exclude flexible matrix to the extent that they meet such definition.

Thanks to this choice, the membrane is especially suitable for water filtration or wastewater purification. Moreover, as it is self-supporting, the matrix allows the filtration membrane to be able to withstand high pressure. The membrane according to the invention is also resistant to the measures usually taken to limit fouling, such as the backwashing. It enables long-term operation without the need for frequent intensive cleaning. Moreover, it is easy to assemble into modules.

According to different aspects of the invention which can be taken alone or in combination:
- said matrix is extruded,
- said matrix comprises a thermoplastic polymer compatible with an extraction of a pore generating material therefrom, especially a solvent,
- said matrix has a volume porosity of at least 65%
- said matrix has a pore size between 0.01 and 25 µm, especially between 0.01 and 10 µm,
- said matrix is a monomodal matrix having a pore size between 1 and 25 µm, especially between 1 and 10 µm,
- said matrix is a bimodal matrix having a first group of pores having a size between 0.01 and 0.1 µm and a second group of larger pores having a size between 1 and 20 µm, especially between 1 and 8 µm,
- the matrix has an overall thickness between 0.3 and 5 mm,
- the matrix has a backweb thickness between 0.2 and 1 mm,
- the polymer is chosen from the group consisting of PVC, PE, PP, acrylic polymers or a mixture thereof,
- said matrix is a mixed matrix further comprising at least one inert filler, in order to define a mixed matrix membrane (MMM),
- the inert filler is pyrogenic silica, precipitated silica, titanium oxide, magnesium carbonate, magnesium oxide, magnesium hydroxide, kaolin and zeolite, or mixtures thereof,
- said matrix is formed into a ribbed and/or a corrugated form,
- said matrix is a monomodal ribbed matrix having a pore size between 1 and 10 µm, preferably between 2 and 6 µm,
- said matrix is a monomodal corrugated matrix having a pore size between 1 and 25 µm, 10 and 14 µm,
- said matrix is a bimodal ribbed matrix comprising a first group of pores having a size between 0.01 and 0.1 µm, preferably between 0.04 and 0.06 µm, more preferably 0.05 µm and a second group of larger pores having a size between 1 and 8 µm, preferably between 1 and 3 µm,
- said matrix is a bimodal corrugated matrix comprising a first group of pores having a size between 0.01 and 0.1 µm, preferably between 0.04 and 0.06 µm, more preferably 0.05 µm and a second group of larger pores having a size between 1 and 20 µm, preferably between 4 and 8 µm,
- said matrix is a plane matrix, given a plane shape to the membrane,
- said matrix is a spirally wound matrix.

The values given to pore size are average pore size. It has to be noted that the pore size depends on the application of the membrane and the size of the filtered elements, and it can be adjusted according to the size of the elements to be retained or to be passed. The skilled in the art will select from one of the previous ranges, the optimum value for each application.

The present invention also concerns a membrane module according to claim 8, comprising at least one organic filtration membrane as described previously.

According to different aspects of the invention which can be taken alone or in combination:
- said membrane module further comprises a permeate line connecting the interior module to a permeate stream,
- said membrane module comprises several superimposed plane membranes,
- said membranes comprise edges joined by gluing and/or welding,
- said membrane of said membrane module comprises superimposed matrix spires,
- said spires are spaced from each other to form a permeate channel,
- the membranes comprise ribs and/or corrugations forming protrusions,
- said protrusions are top against top and form a permeate channel,
- said membrane module is permeate-spacer-less,
- said membrane module is frame-less,

The present invention concerns as well a method according to claim 12 for manufacturing an organic filtration membrane as described previously, comprising the steps of:
i) calendering a raw material to form a raw self-supporting matrix, and
ii) forming pores into the raw self-supporting matrix to form the matrix.

According to different aspects of the invention which can be taken alone or in combination:
- the raw material is extruded,
- the step ii) comprises an extraction,
- said method further comprises a step of formation of additional pores,
- said method further comprises a deformation step of the raw matrix and/or the matrix,
- said deformation step is before and/or after the step ii),
- the deformation step comprises the formation of ribs, and said deformation step is before step ii),
- the deformation step comprises the formation of corrugations, and said deformation step is after step ii).

A membrane and/or a membrane module according to the invention can be used, illustratively and non-limiting, as membrane bioreactor (MBR), membrane photobioreactor (MPBR), enzymatic bioreactor etc.

### Brief description of the drawings:

The invention will be better understood and other objects, details, features and advantages thereof will become more clearly apparent in the following detailed explanatory description of at least one embodiment given as an illustrative and non-limiting example with reference to the attached drawings, in which:
Fig. 1 is a schematic view of a filtration membrane according to the invention,
Fig. 2 is a cross-section view of a part of the filtration membrane shown in figure 1 according to a first embodiment,
Fig. 3 is a cross-section view of a part of the filtration membrane shown in figure 1 according to a second embodiment,
Fig. 4 is a schematic view of a first embodiment of a membrane module according to the invention comprising two filtration membranes shown in figure 2,
Fig. 5 is a cross-section view of the membrane module shown in figure 4,
Fig. 6 is a schematic view of a second embodiment of a membrane module according to the invention comprising spirally wound filtration membranes shown in figure 2,
Fig. 7 is a cross-section view of the membrane module shown in figure 6,
Fig. 8 represents comparing Scanning Electron Microscopy (SEM) images of surface and cross-section of different membranes, (A) MMM or membrane according to the invention, (B) PE membrane and (C) PVDF membrane,
Fig. 9 represents SEM images with different magnifications of the surface of the membrane according to the invention,
Fig. 10 represents a graph showing the relative permeance profiles of long-term filtration for three membranes (MMM, PE and PVDF),
Fig. 11 represents graphs showing the profile of transmembrane pressure (TMP) during eight fed-batch filtrations for four membranes (MMM, PE, PVDF-9 and PVDH-12) in two filtration systems, (A) aerated and (B) vibrated.

### Detailed description:

As illustrated, the invention is related to an organic filtration membrane, especially for use in pressure driven liquid filtrations. According to the invention, said membrane comprises a self-supporting matrix having pores.

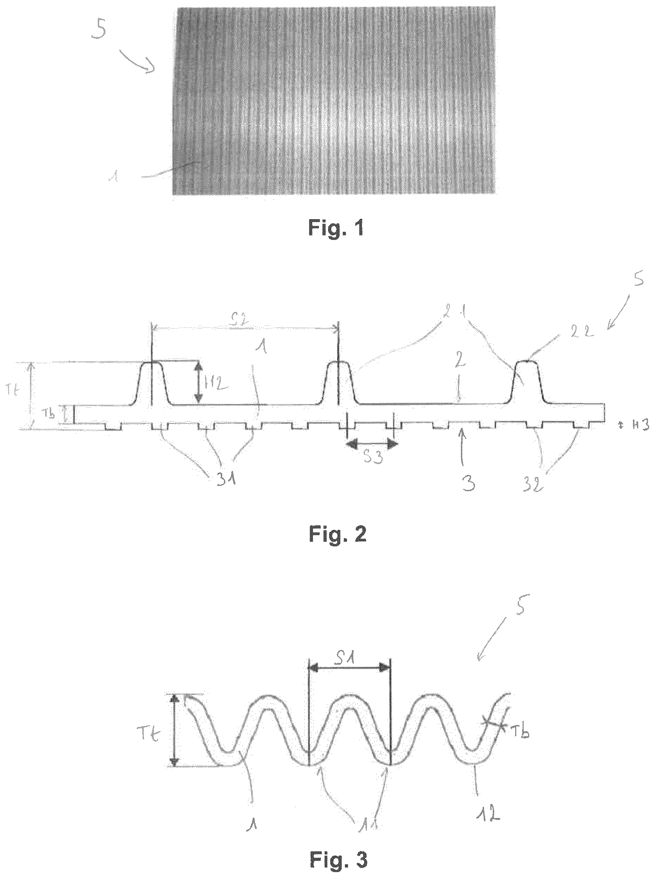

In the two embodiments shown in figures 2 and 3, the filtration membrane comprises an extruded mixed matrix comprising a thermoplastic polymer compatible with an extraction of a pore generating material therefrom, especially a solvent extractable thermoplastic polymer, and at least one inert filler.

In the present invention a "solvent extractable thermoplastic polymer" means a thermoplastic polymer compatible with solvents which can be extracted from the polymeric matrix made thereof to allow the formation of pores. Such polymers are for example PVC, PE, PP, acrylic polymers or a mixture, preferably the polymer is PVC. In the present invention said mixed matric comprises polyvinylchloride (PVC).

The use of thermoplastic polymer as the main materials allows the filtration membrane to operate at higher temperature, in contrast to the prior arts. The resistance to high temperature also allows the filtration membrane to be autoclaved and sterilized by other means and thus to be used in aseptic condition. These thermoplastic polymers are generally highly chemical resistant, especially to the aggressive chemicals that might be used during cleaning.

The inert filler is generally an inorganic filler, such as pyrogenic silica, precipitated silica, titanium oxide, magnesium carbonate, magnesium oxide, magnesium hydroxide, kaolin and zeolite, or mixtures thereof. Preferably, the inert filler is silica particles. The use of silica provides a more hydrophilic membrane. The inert filler may have pores.

The mixed matrix membrane is chosen to be self-supporting after formation. The matrix is advantageously characterised by a volume porosity of at least 65%.

The pore distribution can be monomodal or bimodal. In case of monomodal pores distribution, the pores may come from the extraction. In case of bimodal pores distribution, the pores may come from both the extraction and the pores provided in the filler.

In the case of a monomodal matrix, the pore size is comprised between 1 and 25 µm, especially between 1 and 10 µm.

In the case of a bimodal distribution, the matrix comprises a first group of pores having a size between 0.01 and 0.1 µm and a second group of larger pores having a size between 1 and 20 µm, especially between 1 and 8 µm.

The pore size can be adjusted during the fabrication and/or after the fabrication using post treatment method, as will be seen hereinafter. The bimodal porosity allows the filtration membrane to be applied in ultrafiltration and microfiltration range. Thus, the membranes can be used as fouling resistance filter in the bioprocess application (i.e., enzymatic bioreactor), and/or to filter liquids containing larger particles (i.e., activated sludge and microalgae harvesting).

The matrix can be formed into a ribbed (figure 2) and/or a corrugated form (figure 3) to enhance its self-supporting feature. In these two embodiments, the backweb thickness Tb is between 0.2 and 1 mm and the total thickness Tt of the filtration membrane is between 0.3 and 5 mm.

The specific composition and structure of the matrix according to the invention allow to have a filtration membrane 2 to 3 times thicker than common membranes. The thickness provides not only tortuosity, but also mechanical strength.

Figure 2 shows an example of a ribbed matrix 1 according to the invention. The matrix 1 comprises a first side 2 and a second side 3. Both sides are covered with ribs 21 and 31. The ribs 21 can be spaced 3 to 12 mm (S2) and form protrusions 22 with a height H2 between 0 to 4.7 mm. The ribs 31 can be spaced 1.7 to 12 mm (S3) and form protrusions 32 with a height H3 shorter than H2 and Tb. In the example shown in figure 2, the ribs 21 are spaced 12 mm, while ribs 31 are spaced 6 mm and the total thickness is 3.5 mm. The ribbed matrix can be:
- monomodal with a pore size between 1 and 10 µm, preferably between 2 and 6 µm, more preferably 4 µm, or
- bimodal and comprising a first group of pores having a size between 0.01 and 0.1 µm, preferably between 0.04 and 0.06 µm, more preferably 0.05 µm and a second group of larger pores having a size between 1 and 8 µm, preferably between 1 and 3 µm, more preferably 2 µm.

Figure 3 shows an example of a corrugated matrix 1 according to the invention. A flat matrix 1 is deformed so as to form corrugations 11. In this embodiment, both sides of the matrix 1 are substantially identical. The corrugations 11 form protrusions 12 spaced 4 to 6 mm (S1) and the total thickness Tt of the membrane is between 1.2 and 4.9 mm. In the example shown in figure 3, the corrugations 11 are spaced 4 mm and the total thickness is 2.0 mm. The corrugated matrix can be:
- monomodal with a pore size between 1 and 25 µm, preferably 10 and 14 µm, more preferably 12 µm, or
- bimodal and comprising a first group of pores having a size between 0.01 and 0.1 µm, preferably between 0.04 and 0.06 µm, more preferably 0.05 µm and a second group of larger pores having a size between 1 and 20 µm, preferably between 4 and 8 µm, more preferably 6 µm.

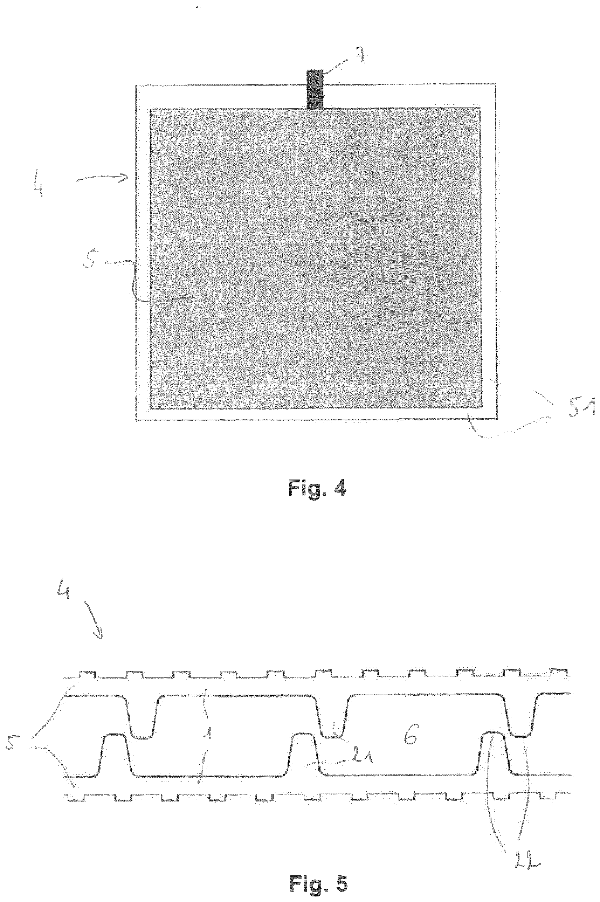

Figures 4 and 5 show a first embodiment of a membrane module 4 according to the invention comprising two deformed membranes 5 as described previously, i.e. ribbed or corrugated membranes. The two membranes 5 are superimposed with, preferably, the sides with the higher protrusions 22 facing each other so as to form a permeate channel 6 with sufficient space for the permeate stream. Unlike common membrane modules, the self-supporting feature of the membranes 5 allows the membrane module 4 to be permeate-spacer-less and to not need a permeate-spacer between the two membranes 5 while still creating a permeate channel 6 and/or preventing the membranes 5 from sticking to each other with pressure filtration.

The membrane module 4 further comprises a permeate line 7 connecting the interior module to the permeate stream like shown in figure 4.

In the embodiment shown in figure 5, the two membranes 5 comprise ribs 21 forming protrusions 22 that are top against top and form the permeate channel 6. In this embodiment, the feed surface is ribbed. It is also possible to have the feed surface flat or corrugated, depending on the purposes.

A deformed feed surface permits the deformations to act as a turbulence promoter. It is very advantageous, especially when applied in a dynamic filtration system where membrane rotated or vibrated at high speed, to promote turbulence and eventually offer a better fouling control. The deformations also act as turbulence promoter when the membrane module is used in the cross-flow filtration system. When the deformed surface is aligned vertically, and the space between two membranes is arranged closely (preferably less than 0.5 mm) the deformation can act as channel, which control the movement of air bubbles used for fouling control system, for example.

In the case of an embodiment with corrugated filtration membranes, the corrugations allow to significantly increasing (up to double) the effective filtration area, which also increase module packing density, and lower the local flux.

As already said, the composition and the deformed (ribbed or corrugated) structure of the membranes 5 in addition to a rather thick cross-section allow the formation of self-supporting membranes and the membrane module 4 can be frame-less. The two membranes 5 are sufficiently rigid such as when the edges 51 of the two membranes 5 are joined by gluing and/or welding the module 4 does not require a frame as mechanical support. Preferably 1 to 2 cm width are used for this sealing purpose.

In Fig. 2 and 3, the matrix was a plane matrix, even if possibly deformed with ribs and/or corrugations, given a plane shape to the membrane.

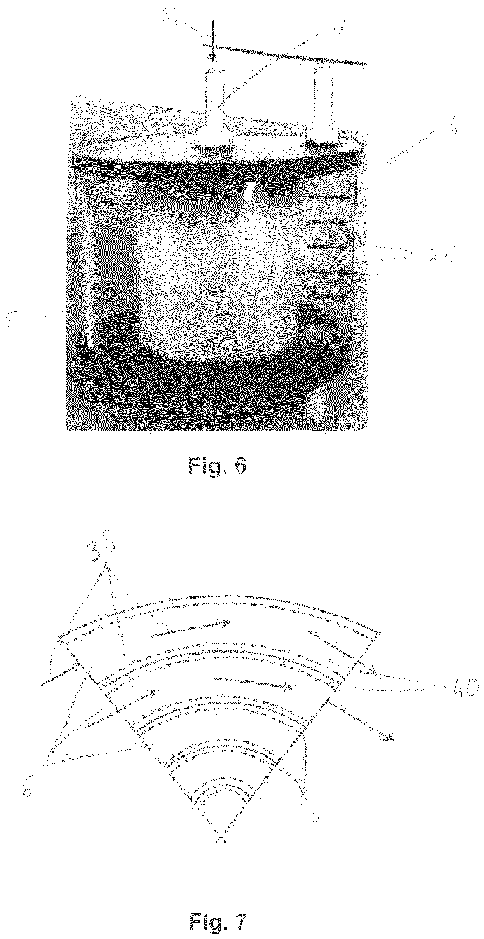

Fig. 6 and 7 show a second embodiment of a membrane module 4 according to the invention comprising a spirally wound membrane 5. The membrane 5 is rolled into a spiral wound module 4 that comprises several spires. Preferably, the spires are spaced from each other to form a permeate channel 6 with sufficient space for the permeate stream. In the same way as the precedent membrane modules, the membrane module 4 does not need a permeate-spacer between two spires while still creating a permeate channel 6 and/or preventing the spires from sticking to each other with pressure filtration.

The membrane module 4 further comprises a central permeate line 7 connecting the interior module to the permeate stream. As shown in Figures 6 and 7, the permeate stream enters the module through the line 7 at the center of the module (arrow 34), circulates in the permeate channels 6 formed by the spires of membrane (arrows 38), and finally get out according to the arrows 36. Since the membrane is microporous, there is some diffusional flow across the membrane in the radial direction.

The feed surface can be flat or deformed, for example ribbed or corrugated, depending on the purposes. The deformations can be located on one face or both faces of the membrane. In the case of deformations on both faces, the protrusions can face each other or can be shifted from each other. In the embodiment shows in fig. 7, the membrane 5 is ribbed on both faces. The envelope of the ribs is shown by a dotted line 40. Such as the first embodiment, the deformations can act as a turbulence promoter that can offer a better fouling control and/or can increase the effective filtration area, particularly with the corrugated membranes.

According to another aspect, the present invention also proposes a process for manufacturing a filtration membrane 5, advantageously comprising the following steps:
1) providing a blend comprising a solvent extractable thermoplastic polymer,
2) extruding and/or calendering the blend to form a raw self-supporting matrix, and
3) forming pores into the self-supporting matrix to form the matrix 1.

The step 1) of providing a blend can comprise:
a) formation of a powder blend comprising a thermoplastic polymer compatible with an extraction of a pore generating material therefrom, especially a solvent extractable thermoplastic polymer, and at least one inert filler,
b) addition of the pore generating material, especially under the form of a first solvent (generally organic solvent) so that the first solvent is absorbed in the pores of the inert filler,
c) addition of a second solvent (generally distilled water) in order to form the blend as a freely flowing wet powder which can be extruded and calendared.

The solvent is used to limit the solving activity of the first solvent towards the thermoplastic material. Steps b) and c) can be reversed.

The step 3) can comprise an extraction. It can be a liquid phase extraction, during which the solvent(s) is (are) extracted from the thermoplastic polymer and, eventually, from the pores provided in the inert filler, by passing the raw self-supporting matrix through a liquid bath (generally hot water at a temperature between 50 to 100 °C). The pores in the thermoplastic polymer are created during this step. After extraction of the solvent(s), the matrix is dried and the pores are hence liberated.

The raw matrix and/or the matrix can also undergo further steps, for example to modify the pore size and/or the porosity of the matrix, like the formation of additional pores. These steps can be during the extraction and/or after the extraction using post-treatment method.

Examples of additional steps are chemical and/or mechanical formation of additional pores, coating treatment or others treatments known to one skilled in the art. Mechanical formation of additional pores can include the deformation of the raw matrix and/or the matrix as described below.

The raw matrix and/or the matrix is deformed. The method then comprises a further deformation step of the raw matrix and/or the matrix. This step can be before and/or after the step 3). Preferably, the deformation step is before step 3) if it comprises the formation of ribs 21, and it is after step 3) if it comprises the formation of corrugations 11.

The raw matrix and/or the matrix can be deformed from double-flat surfaces into either ribbed or corrugated surfaces. The deformation can be performed by goffering or by another process suitable for obtaining the matrix 1 in the form of a sheet having ribs 21 or corrugations 11. This deformation step has the beneficial effect of enhancing the matrix rigidity and of further increasing the volume porosity of the initial flat matrix. For example, a flat matrix of 79.4% volume porosity will have a volume porosity of 81.5% after having been corrugated in order to achieve a final thickness of 1.60 mm starting with a flat sheet of thickness 0.55 mm.

### Example

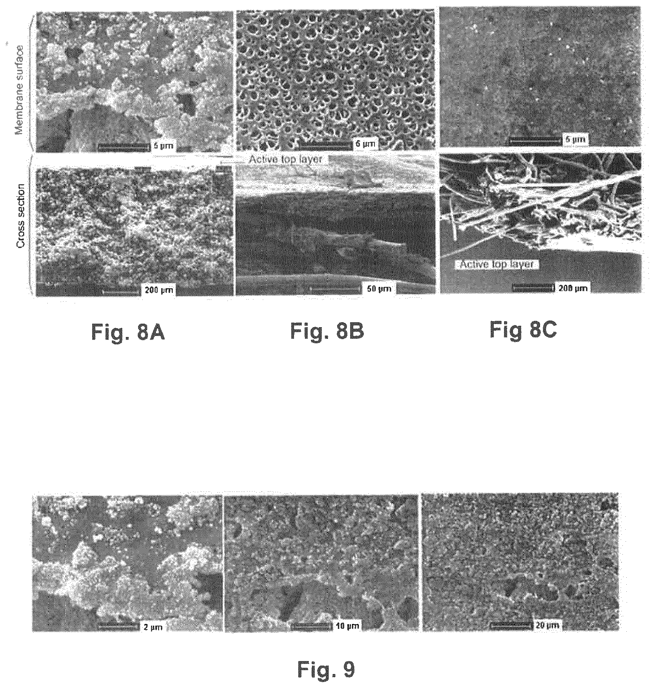

Figure 8 shows the microstructures and properties of a filtration membrane according to the invention in comparison with flexible membranes made of polyethylene (PE) or polyvinylidene fluoride (PVDF). The PE and PVDF membranes are typical examples of commercial membranes prepared according to prior arts. They are cast on a non-woven support and the membrane matrix consists of a thin top layer (few microns), which acts as the active separation layer, and a very porous supporting structure. The attachment of the membrane matrix onto the non-woven support is normally the weakest point that does not allow backwashing (pumping back the permeate from the permeate to the feed side) for the asymmetric flat-sheet polymeric membranes.

In this example, the matrix of the filtration membrane (MMM) of the invention is a mixed matrix made of PVC and silica particles. The matrix pore size distribution is bimodal: pores around 0.04-0.05 µm are due to the voids in between the silica aggregates, while pores around 2-3 µm come from the solvent extraction. The membrane porosity is also very high, ranging from 68% to > 80%, depending on surface patterns and materials formulations. The matrix's cross-section structure is symmetric, unlike the others, and it is much thicker (670 µm, i.e. more than three times as thick as the others), offering a more tortuous pore path than the others. It is a very hydrophilic material (due to the presence of silica particles) and the intrinsic properties of PVC (main building block material) also give a very high oxidation resistance to the aggressive chemicals that might be used during cleaning.

Figure 9 shows SEM images of the surface of the membrane according to the invention with different magnifications.

**Table 1 Main characteristics of the membrane samples.**

| Parameter | MMM | PE | PVDF | PVDF-L1 | PVDF-L2 | |
|---|---|---|---|---|---|---|
| Pore size (supplier data, µm) | 0.15^{a} | 0.03 | 0.22 | - | - | |
| CWP | 850 | 923 | 883 | 3055t0 | 1822±62 | |
| Overall thickness (µm) | 667 | 320 | 165 | 200 | 180 | |
| Cross-section morphology | Symm. | Asymm. | Asymm. | Asymm. | Asymm. | |
| ^{a}The filtration membrane according to the invention pores are bimodal, with two distinct pore sizes: 0.04-0.05 and 1-2µm. | | | | | | |
| CWP is clean water permeance (L/m² h bar) Symm. means symmetric and Asymm. means asymmetric. | | | | | | |

### Application 1: Membrane bioreactor application

The application of filtration membrane according to the invention (MMM) in liquid filtration was tested in membrane bioreactor application. Its performance was directly compared to PE and PVDF membranes listed in Table 1. The test was performed in a labscale membrane bioreactor (MBR) treating cat food based synthetic wastewater. A long-term filtration was checked by running the filtration in the MBR for 53 days. Some chemical cleanings were applied when necessary.

### 1.1 Effluent quality

The summary of feed and permeate Chemical Oxygen Demand (COD) is given in Table 2. The COD removal efficiencies were between 81.2 and 86.4 %, and were also slightly lower than the ones normally obtained for MBRs. This is mainly due to the presence of low-biodegradable substances in the molasses feed. However, no significant difference was observed among different membranes for each sampling batch. All of them also ensured complete solid removal.

**Table 2. Analysis of MBR feed and permeate COD.**

| Feed and permeate | Final COD (mg/L) at different sampling times | | | | | | |
|---|---|---|---|---|---|---|---|
| | 1 | 2 | 3 | 4 | 5 | 6 | 7 |
| Feed | 410 | n.a. | 448 | 535 | 340 | 198 | 227 |
| MMM | 139±10.5 | 75.8±2.0 | 96.6±9.3 | 102.6±4.2 | 53.1±8.9 | 0±0 | 0±0 |
| PVDF | 144±5.1 | 74.4±1.7 | 97±2.0 | 104.8 | 54.8±7.6 | 0±0 | 0±0 |
| PE | 135.8±14.4 | 70±0.6 | 98±1.1 | 87.2 | 26±36.8 | 0±0 | 0.15±0.2 |

Some measurements were done only once, thus explaining the absence of a standard deviation.

### 1.2 Hydraulic performance

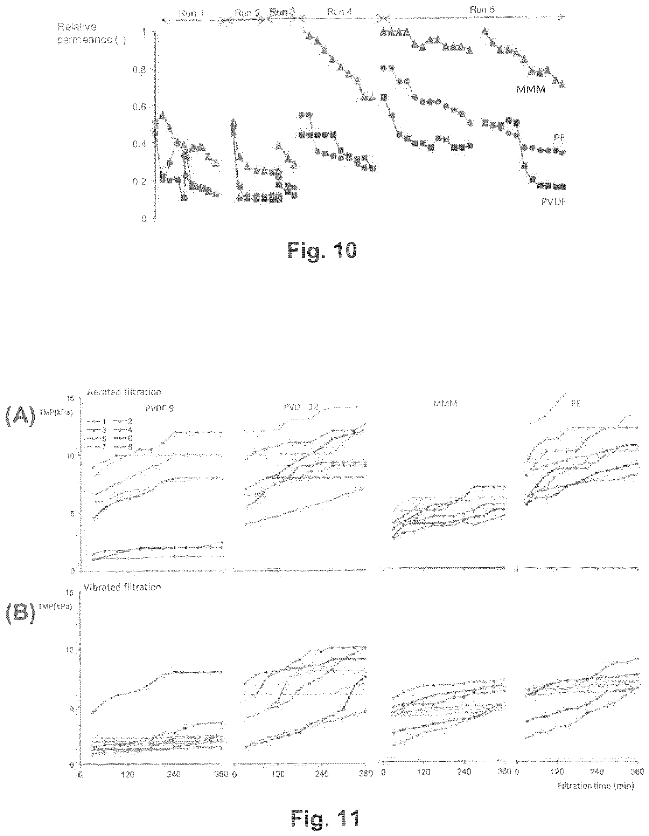

The profile of the relative permeance during the long-term filtration test for the three pairs of tested membranes is shown in Figure 10. The L_{R} is defined as the ratio between the membrane permeances during filtration to the permeance just at the start of each run. During the filtration, the pressure drop (TMP, transmembrane pressure) gradually increased, indicating the permeance loss due to the occurrence of membrane fouling. Thus, the relative permeance during the operation compared to the initial permeance is always smaller than one. A higher L_{R} means a performance close to the initial permeance (each run), hence less fouling. In general, the relative permeance of the membrane filtration according to the invention (MMM) was always higher during basically the entire filtration duration.

### Application 2: Membrane photobioreactor application

Figure 11 shows a direct comparison between MMM, PE, PVDF-9 and PVDF-12 membranes listed in Table 1 to concentrate C. *vulgaris.* The comparison was performed in two filtration systems: aerated (A) and vibrated (B). The filterability of the membranes in both systems was assessed by performing eight stages of 6 h of fed-batch concentration filtrations (corresponding to a 38 times volumetric concentration factor) at each fixed flux of 32.5 L/m²h. The filtration performance was assessed using TMP build-up. The TMP is inversely proportional to the membrane permeance at a fixed flux, and can thus be used directly to compare the filterability of different membranes and different systems. The TMP increase can thus be used as an indirect measure of membrane fouling.

Based on their pore sizes (Table 1), all tested membranes are capable of realizing a complete retention of C. *vulgaris.* Most TMP-values and the TMP built-up rates of the four tested membranes are lower when they are applied in the vibrated system (Fig. 11 (B)), ascribing the advantages of the vibrated system over the aerated one (Fig. 11 (A)). A low rate of TMP build-up means that the filtration time can still be prolonged before a membrane cleaning is required. The TMP-values of the membrane filtration according to the invention (MMM) are considerably more constant than others. They remain lower than others, especially for the last stages. Less effect of concentration factor is also observed. These porous membranes allow to sustain their higher permeance over extended filtration times and thus improve their competitiveness.

## Claims

1. An organic filtration membrane (5), especially for use in pressure driven liquid filtrations, said membrane (5) comprising a self-supporting matrix (1) having pores, wherein said matrix (1) is a mixed matrix comprising polyvinylchloride (PVC) and further comprising at least one inert filler, wherein said matrix (1) is formed into a ribbed and/or a corrugated form, and wherein the overall thickness of the matrix (1) is between 0.3 and 5 mm.

2. An organic filtration membrane (5) according to claim 1, wherein said matrix (1) is extruded.

3. An organic filtration membrane (5) according to any of the precedent claims, wherein said matrix (1) has a volume porosity of at least 65% and/or a pore size between 0.01 and 25 µm.

4. An organic filtration membrane (5) according to any of the precedent claims, wherein said matrix (1) comprises a first group of pores having a size between 0.01 and 0.1 µm and a second group of larger pores having a size between 1 and 20 µm.

5. An organic filtration membrane (5) according to any of the precedent claims, wherein the inert filler is pyrogenic silica, precipitated silica, titanium oxide, magnesium carbonate, magnesium oxide, magnesium hydroxide, kaolin and zeolite, or mixtures thereof.

6. An organic filtration membrane (5) according to any of the precedent claims, wherein said matrix (1) is a plane matrix.

7. An organic filtration membrane (5) according to any of the claims 1 to 5, wherein said matrix (1) is a spirally wound matrix.

8. A membrane module (4) comprising at least one organic filtration membrane (5) according to any of the precedent claims.

9. A membrane module (4) according to claim 8, comprising several superimposed membranes (5) wherein the membranes (5) comprise ribs (21) and/or corrugations (11) forming protrusions (12, 22), and wherein the protrusions (12, 22) are top against top and form a permeate channel (6).

10. A membrane module (4) according to any of the claims 8 or 9, wherein said membranes (5) comprise edges (51) joined by gluing and/or welding.

11. A membrane module (4) according to claim 8, wherein said matrix comprises spires.

12. Method for manufacturing an organic filtration membrane (5) according to any of the claims 1 to 9, comprising the steps of:
i) calendering a raw material comprising polyvinylchloride (PVC) to form a raw self-supporting matrix, and
ii) forming pores into the raw self-supporting matrix to form the matrix (1),
the method further comprising a deformation step of the raw matrix and/or the matrix, wherein said deformation step is before and/or after the step ii).

## Patentansprüche

1. Organische Filtermembran (5), insbesondere zur Verwendung bei druckgesteuerter Flüssigkeitsfiltration, wobei die Membran (5) eine selbsttragende Matrix (1) mit Poren umfasst, wobei die Matrix (1) eine gemischte Matrix ist, die Polyvinylchlorid (PVC) umfasst und ferner mindestens einen inerten Füllstoff umfasst, wobei die Matrix (1) in einer gerippten und/oder gewellten Form gebildet ist und wobei die Gesamtdicke der Matrix (1) zwischen 0,3 und 5 mm beträgt.

2. Organische Filtermembran (5) nach Anspruch 1, wobei die Matrix (1) extrudiert ist.

3. Organische Filtermembran (5) nach einem der vorhergehenden Ansprüche, wobei die Matrix (1) eine Volumenporosität von mindestens 65 % und/oder eine Porengröße zwischen 0,01 und 25 µm aufweist.

4. Organische Filtermembran (5) nach einem der vorhergehenden Ansprüche, wobei die Matrix (1) eine erste Gruppe von Poren mit einer Größe zwischen 0,01 und 0,1 µm und eine zweite Gruppe von Poren mit einer Größe zwischen 1 und 20 µm umfasst.

5. Organische Filtermembran (5) nach einem der vorhergehenden Ansprüche, wobei der inerte Füllstoff pyrogenes Siliziumdioxid, ausgefälltes Siliziumdioxid, Titanoxid, Magnesiumcarbonat, Magnesiumoxid, Magnesiumhydroxid, Kaolin und Zeolith oder Mischungen daraus ist.

6. Organische Filtermembran (5) nach einem der vorhergehenden Ansprüche, wobei die Matrix (1) eine ebene Matrix ist.

7. Organische Filtermembran (5) nach einem der Ansprüche 1 bis 5, wobei die Matrix (1) eine spiralförmig gewundene Matrix ist.

8. Membranmodul (4), mindestens eine organische Filtermembran (5) nach einem der vorhergehenden Ansprüche umfassend.

9. Membranmodul (4) nach Anspruch 8, mehrere übereinandergelegte Membranen (5) umfassend, wobei die Membranen (5) Rippen (21) und/oder Wellen (11) umfassen, die Ausbuchtungen (12, 22) bilden und wobei die Ausbuchtungen (12, 22) mit den Oberseiten aneinanderliegen und einen Permeatkanal (6) bilden.

10. Membranmodul (4) nach einem der Ansprüche 8 oder 9, wobei die Membranen (5) Ränder (51) umfassen, die durch Kleben und/oder Schweißen verbunden sind.

11. Membranmodul (4) nach Anspruch 8, wobei die Matrix Spitzen umfasst.

12. Verfahren zur Herstellung einer organischen Filtermembran (5) nach einem der Ansprüche 1 bis 9, folgende Schritte umfassend:
i) Kalandrieren eine Rohmaterials, das Polyvinylchlorid (PVC) umfasst, um eine selbsttragende Rohmatrix zu bilden, und
ii) Bilden von Poren in der selbsttragenden Rohmatrix, um die Matrix (1) zu bilden,
wobei das Verfahren ferner einen Schritt des Umformens der Rohmatrix und/oder der Matrix umfasst, wobei der Umformungsschritt vor und/oder nach dem Schritt ii) stattfindet.

## Revendications

1. Membrane de filtration organique (5), notamment pour une utilisation dans des filtrations de liquide entraînées par pression, ladite membrane (5) comprenant une matrice autoportante (1) présentant des pores, dans laquelle ladite matrice (1) est une matrice mixte comprenant du polychlorure de vinyle (PVC) et comprenant en outre au moins une charge inerte, dans laquelle ladite matrice (1) est formée sous une forme nervurée et/ou ondulée, et dans laquelle l'épaisseur globale de la matrice (1) est entre 0,3 et 5 mm.

2. Membrane de filtration organique (5) selon la revendication 1, dans laquelle ladite matrice (1) est extrudée.

3. Membrane de filtration organique (5) selon l'une quelconque des revendications précédentes, dans laquelle ladite matrice (1) présente une porosité volumique d'au moins 65 % et/ou une taille de pore entre 0,01 et 25 µm.

4. Membrane de filtration organique (5) selon l'une quelconque des revendications précédentes, dans laquelle ladite matrice (1) comprend un premier groupe de pores présentant une taille entre 0,01 et 0,1 µm et un second groupe de pores plus grands présentant une taille entre 1 et 20 µm.

5. Membrane de filtration organique (5) selon l'une quelconque des revendications précédentes, dans laquelle la charge inerte est de la silice pyrogénée, de la silice précipitée, de l'oxyde de titane, du carbonate de magnésium, de l'oxyde de magnésium, de l'hydroxyde de magnésium, du kaolin et de la zéolite, ou des mélanges de ceux-ci.

6. Membrane de filtration organique (5) selon l'une quelconque des revendications précédentes, dans laquelle ladite matrice (1) est une matrice plane.

7. Membrane de filtration organique (5) selon l'une quelconque des revendications 1 à 5, dans laquelle ladite matrice (1) est une matrice enroulée en spirale.

8. Module (4) de membrane comprenant au moins une membrane de filtration organique (5) selon l'une quelconque des revendications précédentes.

9. Module (4) de membrane selon la revendication 8, comprenant plusieurs membranes (5) superposées dans lequel les membranes (5) comprennent des nervures (21) et/ou des ondulations (11) formant des saillies (12, 22), et dans lequel les saillies (12, 22) sont dessus contre dessus et forment un canal (6) de perméat.

10. Module (4) de membrane selon l'une quelconque des revendications 8 ou 9, dans lequel lesdites membranes (5) comprennent des bords (51) joints par collage et/ou soudage.

11. Module (4) de membrane selon la revendication 8, dans lequel ladite matrice comprend des spires.

12. Procédé de fabrication d'une membrane de filtration organique (5) selon l'une quelconque des revendications 1 à 9, comprenant les étapes de :
i) calandrage d'une matière première comprenant du polychlorure de vinyle (PVC) pour former une matrice autoportante brute, et
ii) formation de pores dans la matrice autoportante brute pour former la matrice (1),
le procédé comprenant en outre une étape de déformation de la matrice brute et/ou de la matrice, dans laquelle ladite étape de déformation est avant et/ou après l'étape ii).
